# EUROPEAN PATENT APPLICATION

(11) **EP 4 704 300 A1**
(43) Date of publication of application: **04.03.2026**
(21) Application number: 24306433.4
(22) Date of filing: 03.09.2024
(51) Int. Cl.: H02J 9/00, G06F 1/32

(54) **ELECTRONIC APPARATUS FOR TEMPORARILY SUPPLYING A LOAD WITH POWER**

(71) Applicant: SCHNEIDER ELECTRIC INDUSTRIES SAS, 92500 Rueil-Malmaison (FR)
(72) Inventor: Fraj, Jan, 763 02 Zlin 4 (CZ)
(74) Representative: Manitz Finsterwald Patent- und Rechtsanwaltspartnerschaft mbB

(57) **Abstract**

The invention is directed at an electronic apparatus (12) for temporarily supplying a load (16) with power, comprising: a power supply (14), a control unit (20), a switching unit (22) and an activation unit (24), wherein the activation unit (24) electrically connects the power supply (14) to the switching unit (22) via a first power supply path when the activation unit (24) is in an active state, wherein the switching unit (22) electrically connects the power supply (14) to the switching unit (22) via a second power supply path and to the load (16) when the switching unit (22) is in a closed state, wherein the control unit (20) is configured to switch the switching unit (22) to the closed state for a predetermined time period when the activation unit (24) is actuated, so that the load (16) and, via the second power supply path, the switching unit (22) is supplied with power for the predetermined time period.

## Description

The invention is directed at an electronic apparatus for temporarily supplying a load with power, a circuit layout and a method.

In modern electronic systems, the management of power delivery to a load for a specific, temporary period is a critical function. Many systems such as lighting systems and climate control units often require precise control mechanisms to ensure that energy is supplied only when needed and for the correct duration. Conventional circuit designs employ components such as switching actuators, timers, and microcontrollers to regulate this timing and control.

A challenge with conventional designs is that the control components responsible for timing and switching need to be continuously powered, even in situations when the system is in an OFF or standby mode. This means that even when these components, such as electronic switches, timers, or microcontrollers, are not actively engaged in controlling the load-such as when they are in standby mode-they still require a constant supply of power. This leads to ongoing energy consumption, which can be inefficient and contribute to unnecessary power wastage.

The issue becomes more pronounced in scenarios where the energy consumption of these control components, even in standby mode, adds up significantly over time. For instance, in lighting systems that are meant to operate only for a predetermined time period after an initial trigger event or in climate control systems that cycle on and off in response to a trigger event, the continuous power requirement of the control circuitry contributes to overall energy wastage. This inefficiency can be particularly problematic in energy-sensitive applications or in systems where sustainability and cost-effectiveness are priorities.

It is an object of the present invention to provide an electronic apparatus having a reduced power consumption.

This object is satisfied by the subject-matter of claim 1.

A first aspect of the invention is directed at an electronic apparatus for temporarily supplying a load with power, comprising:
a power supply, a control unit, a switching unit and an activation unit,
wherein the activation unit electrically connects the power supply to the switching unit via a first power supply path when the activation unit is in an active state, wherein the switching unit electrically connects the power supply to the switching unit via a second power supply path and to the load when the switching unit is in a closed state,
wherein the control unit is configured to switch the switching unit to the closed state for a predetermined time period when the activation unit is actuated, so that the load and, via the second power supply path, the switching unit is supplied with power for the predetermined time period.

In other words, the electronic apparatus is configured in such a way that after an initial triggering of the activation unit the switching unit is only supplied with power for a predetermined time period.

When the activation unit is triggered or actuated, it is placed in an "active state". The activation unit may be a push button which may be in an active state as long as the push button is pressed. In some embodiments the activation unit may also be a switch which may be switched in response to an electrical signal. The activation unit may further be an activation circuit comprising an activation element such as a push button or a switch. Actuating the activation unit establishes a first power supply path from the power supply to the switching unit, allowing the switching unit to receive power and potentially switch states. The power supply may be a voltage source, e.g. an AC or DC voltage source.

Once the activation unit is actuated, the control unit switches the switching unit. This means the control unit sends a signal to the switching unit, causing the switching unit to switch or move to a "closed state" for a predetermined duration. The switching unit may be a physical contact switch, e.g. a relay, a semiconductor switch, e.g. a MOSFET transistor, a thyristor, any kind of suitable electromechanical switch or the like.

In the closed state, the switching unit connects the power supply to the load and, via a second power supply path, to the switching unit. During this time, the load receives the necessary power. If the actuation unit changes into a passive state, i.e. when it is not actuated anymore, the switching unit is still powered via the second power supply path which is provided by the switching unit itself. In other words, the switching unit may switch the same power supply from which it is powered.

However, the control unit is configured to keep the switching unit in the closed state only for the predetermined time period. Once this time period elapses, the control unit signals the switching unit to open, i.e. to change its state into an "open state", thereby stopping the power supply to the load and also disconnecting the second power supply path from the switching unit. The control unit may be a microcontroller, a programmable logic controller, a field programmable gate array or the like. The control unit may be powered by the power supply.

The first power supply path may be defined as the line from the power supply to the switching unit which comprises the activation unit, wherein the second power supply path may be defined as the line from the power supply to the switching unit which comprises the switching unit. The switching unit and the activation unit may be connected in parallel to each other.

The design of the electronic apparatus minimizes power consumption by the switching units when the electronic apparatus is in an OFF mode or a standby mode, i.e. when the load is not supplied with power and no actuation of the activation unit has been triggered, as they are only powered during active periods. Furthermore, the control unit can precisely manage the duration for which the load is powered, which can be crucial for timed operations, such as automated lighting or controlled heating.

Hence, the disclosed system effectively provides a way to control power delivery to a load in a temporary and efficient manner, which can be useful in a variety of applications where energy conservation and precise control are necessary. In particular control components such as the switching unit are not consuming any power during an OFF or standby mode.

Further embodiments are included in the description, the drawings and the claims.

According to a first embodiment the activation unit further electrically connects the power supply to the control unit via a third power supply path when the activation unit is in an active state, wherein the switching unit further electrically connects the power supply to the control unit via a fourth power supply path when the switching unit is in a closed state, wherein the control unit is configured to switch the switching unit to the closed state for a predetermined time period when the activation unit is actuated, so that the switching unit and the control unit are supplied with power for the predetermined time period. The third power supply path may be defined as the line from the power supply to the control unit which comprises the activation unit, wherein the fourth power supply path may be defined as the line from the power supply to the control unit which comprises the switching unit. The first and third power supply path may be at least partially identical, i.e. a partial line of the first power supply path may be identical to a partial line of the second power supply path. Accordingly, the second and fourth power supply path may be at least partially identical, i.e. a partial line of the second power supply path may be identical to a partial line of the fourth power supply path. Both the switching unit and the control unit may be powered during the same time intervals. In particular, the control unit and the switching unit are connected in parallel to each other. Accordingly, the apparatus minimizes power consumption by both the switching unit and the control unit when the electronic apparatus is in an OFF mode or a standby mode.

According to an embodiment the electronic apparatus is configured to supply power to the switching unit and/or the control unit only within the predetermined time period after actuating the activation unit. In particular, the switching unit and/or the control unit are only supplied with power in an ON mode of the electronic apparatus, i.e. after the activation unit is actuated, and not in an OFF mode or a standby mode. The control unit and/or the switching unit may be electrically disconnected from the power supply in a standby mode or OFF mode of the electronic apparatus preventing the control unit and/or switching unit from consuming any power. This is achieved by powering the switching unit and/or the control unit only if the switching unit is in a closed state or if the activation unit is in an active state. Since the switching unit is only in a closed state for the predetermined time period, these conditions are only met in an ON mode of the electronic apparatus.

According to an embodiment a first input terminal of an OR-gate component is electrically connected to the power supply via the activation unit when the activation unit is in an active state, wherein a second input terminal of the OR-gate component is electrically connected to the power supply via the switching unit when the switching unit is in a closed state, wherein an output terminal of the OR-gate component is connected to the switching unit and/or the control unit. The OR-gate component may be an electrical component implementing a logical OR. The OR-gate component may output a high voltage signal (logic level 1) if at least one of its inputs is high (logic level 1). The output may be a low voltage signal (logic level 0) only if all of its inputs may is low (logic level 0). Accordingly, the switching unit and/or control unit may be powered by means of the power supply if at least one of the electrical paths from the power supply to the first input terminal or the power supply to the second input terminal is intact, i.e. if at least one input terminal of the OR-gate component has a high input signal. e.g. a high voltage signal. Hence, the electronic apparatus may be configured to supply power to the switching unit via the second power supply path and/or to the control unit via the fourth power supply path for the predetermined time period when the activation unit is in a passive state and the switching unit is in a closed state.

According to an embodiment the activation unit and/or the switching unit are directly connected to the OR-gate component. I.e. there are no components arranged between the activation unit and the OR-gate component and/or the switching unit and the OR-gate component. The electronic apparatus may only comprise the herein described components, i.e. the electronic apparatus may not need any further components to ensure that the load is supplied with power for the predetermined time period.

According to an embodiment the OR-gate component comprises an anti-serial diodes connection block, a transistor-transistor logic (TTL) or a CMOS transistor logic. The OR-gate component may include at least one of the following: a bipolar transistor (BJT), a MOSFET transistor, a programmable logic device and/or a memristor.

According to an embodiment the output terminal of the OR-gate component is connected to the switching unit and/or the control unit via a voltage converter. The voltage converter may change the form of electrical power from AC to DC or vice versa. The voltage converter may further adjust the voltage level, in particular lower the voltage level to a level suitable for the control unit and/or switching unit. Furthermore, the voltage converter may provide an internal power supply voltage. The voltage converter may comprise a rectifier, e.g. a semiconductors bridge rectifier, an inverter comprising BJTs, MOSFETs and/or IGBTs, and/or a transformer.

According to an embodiment after the predetermined time period the control unit is configured to switch the switching unit to the open state, thereby cutting off the power supply of the switching unit and/or the control unit. In particular, the switching unit is cutting off its own power supply when it is switched into an open state.

According to an embodiment the control unit comprises a microcontroller comprising a timer function or an analogue timer unit. The microcontroller may control the switching of the switching unit based on the predetermined time period. For example, the microcontroller may boot up after the actuation of the activation unit when power is supplied to the microcontroller via the third power supply path. The microcontroller may comprise a timer function which is activated after the microcontroller boot up. The timer function may comprise the following: actuating the switching unit into a closed state, waiting for the predetermined time period and actuating the switching unit into an open state after the predetermined time period has been expired. The predetermined time period may be stored in a storage unit of the microcontroller.

Alternatively, the control unit may be an analogue timer unit where the timer function may be implemented analogue. For instance, the timer function may be implemented by using an RC circuit and a timer circuit, e.g. a 555-timer IC. The 555-timer IC may be set up in monostable mode, where it produces a single output pulse of fixed duration in response to a trigger signal, i.e. an actuation of the activation unit.

The RC circuit, consisting of a resistor and capacitor, may determine the length of the pulse produced by the 555-timer. When the circuit is powered by the power supply via the first power supply path, the capacitor in the RC network charges through the resistor, and the timing interval for which the output remains active is governed by the RC time constant, which is the product of the resistor's resistance (R) and the capacitor's capacitance (C). This time constant may set how long the capacitor takes to charge and, correspondingly, how long the 555 timer's output stays high.

The resistor and capacitor may be connected in such a way that they influence the timing of the 555 timer. The resistor may be connected between the power supply and a discharge pin, while the capacitor may be connected between the discharge pin and ground. The 555 timer's output pin may be connected to the switching unit, e.g. to the base of an NPN transistor or the gate of an NMOS transistor.

When a trigger signal is applied to the 555 timer's trigger input, it causes the output to go high for a predetermined time period determined by the RC circuit. During this time, the switching unit moves into a closed state. The output of the 555 timer will remain high as long as the capacitor charges through the resistor. After the predetermined time period, defined by the RC characteristics, the 555 timer output goes low, turning off the switching unit and moving the switching unit into an open state.

The switching unit and control unit may further be implemented as a single unit, e.g. a time relay, comprising the functions of the switching unit and the control unit. The time relay can be set up to establish a connection (pick-up delay) or disconnect (drop-out delay) after the application of a control voltage for a specific time period. Once the predetermined time period has elapsed, the relay may automatically return to its original state.

According to an embodiment a minimum actuation time period of the activation unit is greater than the sum of a switch-ON delay time of the switching unit and a bouncing time of the switching unit. The switch-ON delay time may be the time required for the switching unit to fully transition from an open to a closed state after the activation unit has been actuated. It may account for any internal delays in the switching mechanism. The bouncing time may be the time period during which the switching unit may exhibit unstable behavior, causing multiple unwanted transitions between open and closed states before settling down to the closed position. This is a common phenomenon in mechanical switches. To be able to establish an, at least temporary, power supply path via the switching unit the electronic apparatus and the actuation time period of the activation unit may fulfil the preceding requirements. However, the actuation time period of the activation unit may also be relatively short since the activation unit is supposed to only provide a power supply path to the switching and/or control unit for a short time period until a power supply path via the switching unit is established. The actuation time period of the activation unit may therefore be less than 1 second, in particular less than 0.5 seconds, 0.1 seconds or 0.05 seconds.

According to an embodiment the predetermined time period is less than 10 minutes, in particular less than 5 minutes, 1 minute, 30 seconds, 10 seconds or 5 seconds. For devices like automotive turn signal lights or decorative lighting, short time periods ranging from milliseconds to a few seconds may be used to create blinking or flashing effects.

In some HVAC systems, a fan may run for a few seconds after the main heating or cooling cycle ends to dissipate residual heat or cool air. In residential or commercial lighting systems, timers might be set for periods ranging from a few seconds to several minutes. For instance, exterior lighting systems might remain on for a few minutes after sunset. Bathroom exhaust fans often have timers set for 5 to 15 minutes to ensure proper ventilation after use. Some heating or cooling systems use timers in the range of seconds to minutes to manage pre-heating or precooling cycles. For outdoor lighting systems, such as garden or security lights, timers may be set for longer periods, typically ranging from 15 minutes to several hours. However, the predetermined time period may also comprise extended time spans. In industrial applications for example, equipment such as pumps, heaters, or cooling units might use timers set for several hours to operate in cycles or manage processes.

Another aspect of the invention is directed at a Circuit layout for temporarily supplying a load with power, comprising:
a power terminal, a load terminal, an activation unit, a switching unit, an OR-gate component and a control unit for controlling the actuation of the switching unit,
wherein the activation unit is connected to the power terminal and a first input terminal of the OR-gate component enabling an electrical connection from the power terminal to the first terminal of the OR-gate-component when the activation unit is in an active state,
wherein a first terminal of the switching unit is connected to the power terminal and a second terminal of the switching unit is connected to the load terminal and a second input terminal of the OR-gate component enabling an electrical connection from the power terminal to the OR-gate-component when the switching unit is in a closed state,
wherein an output terminal of the OR-gate component is connected to the switching unit,
wherein the control unit is connected to the switching unit in order to control the actuation of the switching unit.

According to an embodiment the output terminal of the OR-gate component is further connected to the control unit. Hence, both the switching unit and the control unit may be powered by the same power supply and during the same time intervals. In other words, both the switching unit and the control unit may be turned off simultaneously, e.g. when the switching unit changes from a closed state into an open state. In particular, the control unit and the switching unit are connected in parallel to each other.

Another aspect of the invention is directed at a method for temporarily supplying a load with power using an electronic apparatus according to any one of the preceding embodiments, comprising:
actuating an activation unit for an actuation time period,
supplying power to a switching unit via a first power supply path,
actuating the switching unit by means of a control unit, thereby supplying power to the switching unit via a second power supply path and to a load,
deactivating the activation unit after the actuation time period, thereby stopping to supply power to the switching unit via the first power supply path,
releasing the switching unit by means of the control unit after a predetermined time period, thereby stopping to supply power to the load and to the switching unit via the second power supply path.

It is to be noted that the foregoing explanations and embodiments with respect to the electronic apparatus may apply to the circuit layout and the method accordingly, if they are applicable.

It is to be further noted that any combination of the foregoing embodiments may be possible, if it is not explicitly excluded.

Exemplary embodiments and functions of the present invention are described herein in conjunction with the following drawings, showing schematically:
- Fig. 1: an embodiment of an electronic apparatus
- Fig. 2: an OFF state of the electronic apparatus
- Fig. 3: an initialization phase of the electronic apparatus
- Fig. 4: an ON state of the electronic apparatus
- Fig. 5: a turn-off sequence of the electronic apparatus

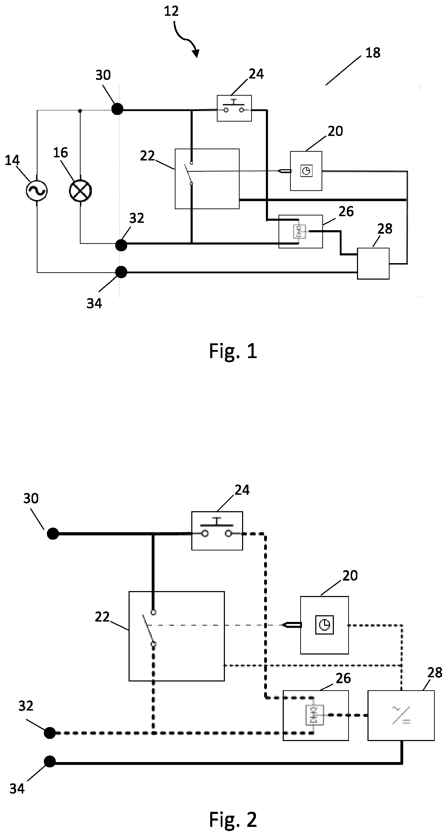

Fig. 1 shows an embodiment of an electronic apparatus 12 for temporarily supplying a load with power. The electronic apparatus 12 comprises an AC voltage source 14 as a power supply, a lamp 16 as a load and a circuit 18 for temporary power supply comprising a microcontroller 20 as a control unit, a switch 22 as a switching unit, a push button 24 as an activation unit, an anti-serial diodes connection block (ASDCB) 26 as an OR-gate component and a voltage converter 28.

The circuit 18 further comprise a first port 30, a second port 32 and a third port 34, wherein the lamp 16 is connected to the first port 30 and the second port 32 and the AC voltage source 14 is connected to the first port 30 and the third port 34.

Furthermore, the push button 24 is connected to the first terminal 30 and a first input terminal of the ASDCB 26 enabling an electrical connection from the power supply to the first terminal of the ASDCB 26 when the push button 24 is in an active state. Moreover, a first terminal of the switch 22 is connected to the first port 30 and a second terminal of the switch 22 is connected to the second port 32 and a second input terminal of the ASDCB 26 enabling an electrical connection from the power supply to the ASDCB 26 when the switch 22 is in a closed state. An output terminal of the ASDCB 26 is connected to the switch 22 and to the microcontroller 20 via the voltage converter 28 which rectifies the AC voltage to a DC voltage, wherein the microcontroller 20 is connected to the switch 22 in order to control the actuation of the switch 22. The voltage converter 28 is further connected to the AC voltage source via the third port 34, wherein the electrical connection between the AC voltage source and the voltage converter is a neutral line. The operation of the electronic apparatus will be described with respect to Figs. 2 to 5. For simplification purposes the power supply and the load are not shown in Figs. 2 to 5.

Fig. 2 illustrates an OFF state of the electronic apparatus 12, wherein the solid lines represent lines where an electrical potential, i.e. a voltage is present, and wherein the dashed lines represent lines where no electrical potential is present. In the OFF state the push button 24 is in a passive state, i.e. the push button 24 is not pressed, and the switch 22 is in an open state, thereby preventing an electric flow. In the OFF state of the electronic apparatus 12 neither the lamp 16 nor the switch 22 or the microcontroller 20 are supplied with power as indicated by the dashed lines.

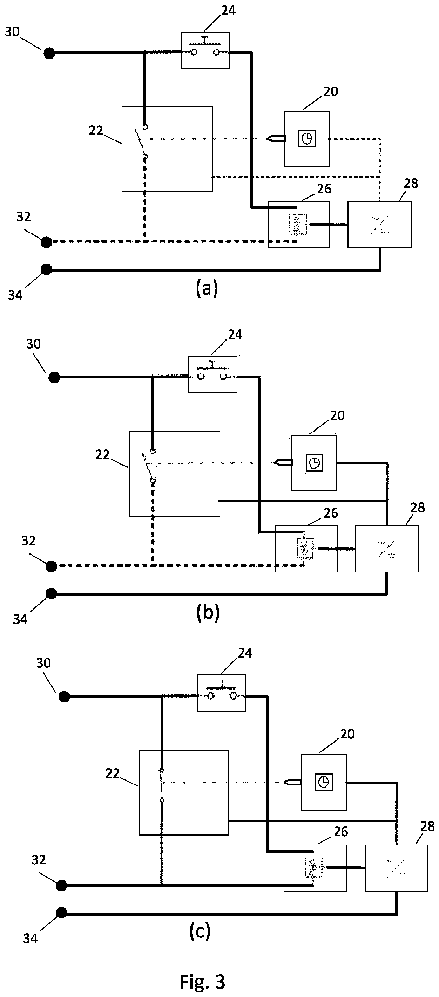

Fig. 3 illustrates an initialization phase of the electronic apparatus 12.

When the push button 24 is in an active state, i.e. when the push button 24 is pressed, the push button 24 electrically connects the AC voltage source 14 to the voltage converter 28 via the ASDCB 26 as shown in Fig. 3(a). The voltage converter 28 rectifies the AC voltage to a DC voltage and applies the DC voltage to the microcontroller 20 and the switch 22 as shown in Fig. 3(b). Hence, an electrical connection between the power supply, i.e. the AC voltage source 14, and the switch 18 may be established via a first power supply path. Accordingly, an electrical connection between the AC voltage source 14 and to the microcontroller 20 may be established via a third power supply path. The first power supply path includes the line from the AC voltage source 14 to the push button 24, from the push button 24 to the ASDCB 26, from the ASDCB 26 to the voltage converter 28 and from the voltage converter 28 to the switch 22. Accordingly, the third power supply path includes the line from the AC voltage source 14 to the push button 24, from the push button 24 to the ASDCB 26, from the ASDCB 26 to the voltage converter 28 and from the voltage converter 28 to the microcontroller 20.

As a result, once the push button 24 is pressed, the microcontroller 20 is powered and boots up. After the boot up is finished, the microcontroller 20 is configured to actuate the switch 22. This means the microcontroller 20 sends a signal to the switch 22, causing the switch 22 to switch or move to a closed state for a predetermined duration as shown in Fig. 3(c).

When the switch 22 is in a closed state, the switch 18 electrically connects the AC voltage source 14 to the switch 18 via a second power supply path and to the microcontroller 20 via a fourth power supply path. The second power supply path includes the line from the AC voltage source 14 to the switch 22, from the switch 22 to the ASDCB 26, from the ASDCB 26 to the voltage converter 28 and from the voltage converter 28 to the switch 22. Accordingly, the fourth power supply path includes the line from the AC voltage source 14 to the switch 22, from the switch 22 to the ASDCB 26, from the ASDCB 26 to the voltage converter 28 and from the voltage converter 28 to the microcontroller 20.

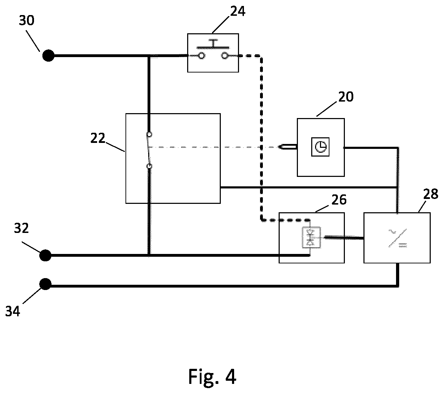

Fig. 4 illustrates an ON state of the electronic apparatus 12, wherein the push button is released, i.e. not pressed anymore. In other words, there is no active electrical connection between the push button 24 and the ASDCB 26 as indicated by the dashed lines. The power supply of the switch 22 and the microcontroller 20 is therefore solely based on the second and fourth power supply path, respectively. Hence, as long as the switch 22 is in the closed state, the lamp 16, the switch 22 and the microcontroller 20 may be supplied with power.

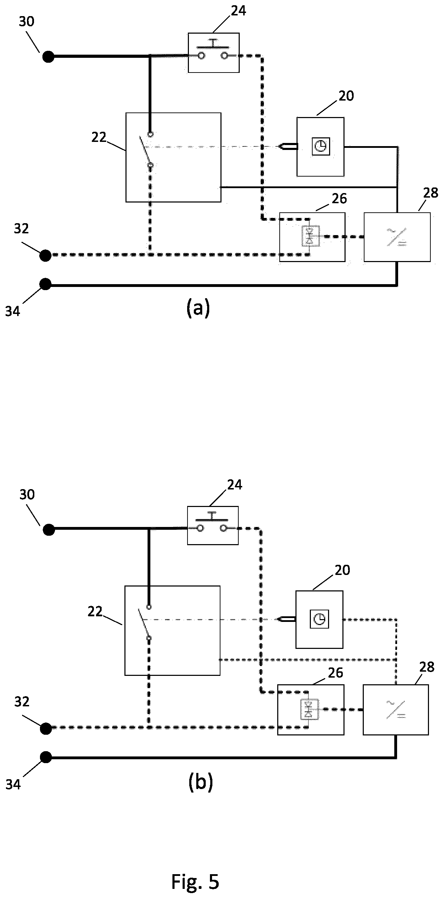

Fig. 5 illustrates a turn-off sequence of the electronic apparatus 12.

As described, the microcontroller 20 is configured to keep the switch 22 in the closed state, shown in Fig. 4, only for the predetermined time period. Once this time period elapses, the microcontroller 20 signals the switch 22 to open, i.e. to change its state to the open state, thereby stopping the power supply to the lamp 16 and also disconnecting the second power supply path from the switch 22 and the fourth power supply path from the microcontroller 20. In other words, after expiry of the predetermined time period the lamp 16, the switch 22 and the microcontroller 20 are disconnected from any power supply as shown in Fig. 5.

Fig. 5(a) illustrates a first phase of the turn-off sequence where the push button 24 is still released and the switch 22 is switching from the closed state to the open state after the predetermined time period has expired. However, the microcontroller 20 and the switch 22 are still powered, as indicated by the solid lines, until the internal capacitance of the voltage converter 28 is discharged.

Fig. 5(b) illustrates a second phase of the turn-off sequence where the push button 24 is released and the switch 22 is in an open state after the predetermined time period has expired. As indicated by the dashed lines between the voltage converter 28 and the microcontroller 20 and the dashed lines between the voltage converter 28 and the switch 22, the internal capacitance of the voltage converter 28 is fully discharged and the microcontroller 20 and the switch 22 are not powered anymore.

### Reference numerals

- 12: electronic apparatus
- 14: AC voltage source
- 16: lamp
- 18: circuit
- 20: microcontroller
- 22: switch
- 24: push button
- 26: anti-serial diodes connection block
- 28: voltage converter
- 30: first port
- 32: second port
- 34: third port

## Claims

1. Electronic apparatus (12) for temporarily supplying a load with power, comprising:
a power supply, a control unit, a switching unit and an activation unit,
wherein the activation unit electrically connects the power supply to the switching unit via a first power supply path when the activation unit is in an active state,
wherein the switching unit electrically connects the power supply to the switching unit via a second power supply path and to the load when the switching unit is in a closed state,
wherein the control unit is configured to switch the switching unit to the closed state for a predetermined time period when the activation unit is actuated, so that the load and, via the second power supply path, the switching unit is supplied with power for the predetermined time period.

2. Electronic apparatus (12) according to claim 1,
the activation unit further electrically connects the power supply to the control unit via a third power supply path when the activation unit is in an active state,
wherein the switching unit further electrically connects the power supply to the control unit via a fourth power supply path and to the load when the switching unit is in a closed state,
wherein the control unit is configured to switch the switching unit to the closed state for a predetermined time period when the activation unit is actuated, so that the switching unit and the control unit are supplied with power for the predetermined time period.

3. Electronic apparatus (12) according to claim 1 or 2,
wherein the electronic apparatus (12) is configured to supply power to the switching unit and/or the control unit only within the predetermined time period after actuating the activation unit.

4. Electronic apparatus (12) according to any one of the preceding claims, wherein a first input terminal of an OR-gate component is electrically connected to the power supply via the activation unit when the activation unit is in an active state,
wherein a second input terminal of the OR-gate component is electrically connected to the power supply via the switching unit when the switching unit is in a closed state,
wherein an output terminal of the OR-gate component is connected to the switching unit and/or the control unit.

5. Electronic apparatus (12) according to claim 4,
wherein the activation unit and/or the switching unit are directly connected to the OR-gate component.

6. Electronic apparatus (12) according to claim 4 or 5,
wherein the OR-gate component comprises an anti-serial diodes connection block, a transistor-transistor logic (TTL) or a CMOS transistor logic.

7. Electronic apparatus (12) according to any one of claims 4 to 6,
wherein the output terminal of the OR-gate component is connected to the switching unit and/or the control unit via a voltage converter (28).

8. Electronic apparatus (12) according to any one of the preceding claims, wherein after the predetermined time period the control unit is configured to switch the switching unit to the open state, thereby cutting off the power supply of the switching unit and/or the control unit.

9. Electronic apparatus (12) according to any one of the preceding claims, wherein the control unit comprises a microcontroller comprising a timer function or an analogue timer unit.

10. Electronic apparatus (12) according to any one of the preceding claims, wherein a minimum actuation time period of the activation unit is greater than the sum of a switch-ON delay time of the switching unit and a bouncing time of the switching unit.

11. Electronic apparatus (12) according to any one of the preceding claims, wherein an actuation time period of the activation unit is less than 1 second, in particular less than 0.5 seconds, 0.1 seconds or 0.05 seconds.

12. Electronic apparatus (12) according to any one of the preceding claims, wherein the predetermined time period is less than 10 minutes, in particular less than 5 minutes, 1 minute, 30 seconds, 10 seconds or 5 seconds.

13. Circuit layout for temporarily supplying a load with power, comprising:
a power terminal, a load terminal, an activation unit, a switching unit, an OR-gate component and a control unit for controlling the actuation of the switching unit,
wherein the activation unit is connected to the power terminal and a first input terminal of the OR-gate component enabling an electrical connection from the power terminal to the first terminal of the OR-gate-component when the activation unit is in an active state,
wherein a first terminal of the switching unit is connected to the power terminal and a second terminal of the switching unit is connected to the load terminal and a second input terminal of the OR-gate component enabling an electrical connection from the power terminal to the OR-gate-component when the switching unit is in a closed state,
wherein an output terminal of the OR-gate component is connected to the switching unit,
wherein the control unit is connected to the switching unit in order to control the actuation of the switching unit.

14. Circuit layout according to claim 13,
wherein the output terminal of the OR-gate component is further connected to the control unit.

15. Method for temporarily supplying a load with power using an electronic apparatus (12) according to any one of claims 1 to 12, comprising:
actuating the activation unit for an actuation time period,
supplying power to the switching unit via a first power supply path,
actuating the switching unit by means of the control unit, thereby supplying power to the switching unit via a second power supply path and to a load,
deactivating the activation unit after the actuation time period, thereby stopping to supply power to the switching unit via the first power supply path,
releasing the switching unit by means of the control unit after a predetermined time period, thereby stopping to supply power to the load and to the switching unit via the second power supply path.
